# EUROPÄISCHE PATENTSCHRIFT

(11) **EP 0 695 008 B1**
(45) Veröffentlichungstag und Bekanntmachung des Hinweises auf die Patenterteilung: **25.11.1998**
(21) Anmeldenummer: 95111016.2
(22) Anmeldetag: 13.07.1995
(51) Int. Cl.: H02G 3/06, H02G 3/08, H01R 13/58

(54) **Universelle Kabelklemmvorrichtung**
Universal cable clamping device
Dispositif de blocage de câble universel

(30) Priorität: 26.07.1994 DE 9412042 U
(43) Veröffentlichungstag der Anmeldung: 31.01.1996
(73) Patentinhaber: SIEMENS AKTIENGESELLSCHAFT, 80333 München (DE)
(72) Erfinder: Vache, Peter, D-91336 Heroldsbach (DE); Armbrecht, Achim, D-90766 Fürth (DE)

(56) Entgegenhaltungen:
- WO-A-91/07793
- US-A- 4 223 178

## Beschreibung

Beim Anschluß von elektrische Signale und/oder elektrische Energie führenden Leitern eines Kabels müssen standardmäßig Maßnahmen zur sogenannten "Zugentlastung" vorgesehen werden. Diese sollen verhindern, daß die Leiter des Kabels durch eine in der Regel versehentliche, schockartige Zugbelastung aus den elektrischen Anschlußelementen wie z.B. Klemmleisten, Steckverbindern u.dgl. gerissen werden.

Für eine derartige Zugentlastung werden in einem sehr großen Umfang allgemein als sogenannte "Kabelklemmen" bezeichnete Elemente verwendet. Diese bewirken vielfach unter Zuhilfenahme von Schraubverbindungen und unter Ausübung einer auf den Kabelmantel einwirkenden, quetschenden Klemmkraft eine zugsichere Halterung von Kabelenden z.B. in Schaltschränken, Steckverbindern, Klemmleisten und dergleichen.

Mit derartigen Kabelklemmen sind einige Nachteile verbunden. So sind zur Montage in der Regel Werkzeuge erforderlich, wie z.B. Schraubenzieher u.dgl.. Ein ständig auftretendes Problem bei Kabelklemmen besteht darin, möglichst nur mit einem einzigen Klemmentyp, welcher über bestimmte Abmessungen verfügt, schnell und dauerhaft Kabel auch mit unterschiedlichen Durchmessern zu verklemmen. Vielfach muß zur Verklemmungen von stark unterschiedlich dicken Kabeln entweder ein Satz von entsprechend unterschiedlich dimensionierten Kabelklemmen vorrätig gehalten werden, bzw. es sind zumindest Hilfeteile wie z.B. Einlageelemente bzw. Reduzierstücke für den Durchgangsquerschnitt der Kabelklemme notwendig. In aller Regel muß also der Nennquerschnitt der Kabelklemme an den Querschnitt des jeweils zu verklemmenden Kabels entweder unter Aufwendung von besonderem Montageaufwand und/oder unter Einsatz von zusätzlichen bzw. alternativen Adapterteilen angepaßt werden.

Aus der US 4,223,178 ist eine Klemmvorrichtung für Kabel bekannt. Diese weist ein erstes Klemmteil auf, welches annähernd u-förmig ist und zur Einlage eines Kabelmantels dient. Ein zweites Klemmteil weist abstehende Beine auf, welche mit Widerhaken belegt sind. Diese können in entsprechende Öffnungen einer Tragplatte eingerastet werden, wobei das erste Klemmteil und eine Kabelmantel vom zweiten Klemmteil umfaßt werden.

Demgegenüber liegt der Erfindung die Aufgabe zugrunde, eine universelle Kabelklemmvorrichtung anzugeben, mit der auf einfache Weise und möglichst ohne Einsatz von Werkzeugen eine variable Verklemmung auch von Kabeln möglich ist, die stark unterschiedliche Durchmesser aufweisen.

Die Aufgabe wird gelöst mit der im Anspruch 1 angegebenen Vorrichtung. Vorteilhafte weitere Ausführungsformen derselben sind in den nachfolgenden Unteransprüchen angegeben.

Die erfindungsgemäße Vorrichtung zur variablen Verklemmung von Kabeln unterschiedlichen Durchmessers weist einen Satz von vier Klemmbacken auf, welche annähernd in einer gemeinsamen radialen Ebene um den Mantel des jeweils zu verklemmenden Kabels legbar sind. Erfindungsgemäß weisen die Klemmbacken jeweils zumindest an einer in der radialen Ebene liegenden Außenseite eine Riffelung auf. Die erfindungsgemäße Vorrichtung umfaßt ferner mindestens eine annähernd quer zum jeweils zu verklemmenden Kabel verlaufende, bevorzugt gestreckte Mulde, wobei zumindest eine der annähernd quer zum Kabel verlaufenden Längsinnenseiten der mindestens einen Mulde eine korrespondierende Riffelung aufweist. In diese Riffelung sind die Klemmbacken über die jeweils geriffelte Außenseite derart einschiebbar, daß eine radial auf den Kabelmantel gerichtet und eine Klemmwirkung verursachende Kraft entsteht.

Eine derartige Vorrichtung hat den Vorteil, daß aufgrund des durch die Länge der bevorzugt gestreckten Mulde bereitgestellten Ausgleichs- und Aufnahmeraumes für die den Kabelmantel umgreifenden Klemmbacken eine Verklemmung von Kabeln unterschiedlichsten Durchmessers möglich ist, ohne daß hierfür besondere Montagemaßnahmen und Adapterteile notwendig wären. Vorteilhaft ist ferner, daß die Verklemmung durch Eindrücken der Klemmbacken in die Mulde, wobei jeweils die mit der Riffelung versehenen Oberflächen von Klemmbacken und Mulde einander zugewandt sind, gegebenenfalls durch eine Handmontage ohne Einsatz von irgendwelchen Werkzeugen erfolgen kann.

Die mindestens eine, innenseitig teilweise bzw. vollständig geriffelte Mulde kann in unterschiedlichste Trägerteile integriert sein. Bei einer ersten Variante kann die Mulde einteilig auf der Innenseite z.B. in den Korpus einer Steckergehäuseschale eingeformt sein. Bei einer weiteren Variante kann die mindestens eine Mulde in einen separaten Muldenblock eingeformt sein, welcher z.B. an eine Steckergehäuseschale angeformt bzw. mittels eigener Montagemittel z.B. auf Profilschienen eines Aufbausystems bzw. in einem Schaltschrank gehalten wird.

Die Erfindung und vorteilhafte Ausführungsformen derselben werden anhand der in der Beschreibung enthaltenen Figur nachfolgend näher erläutert.

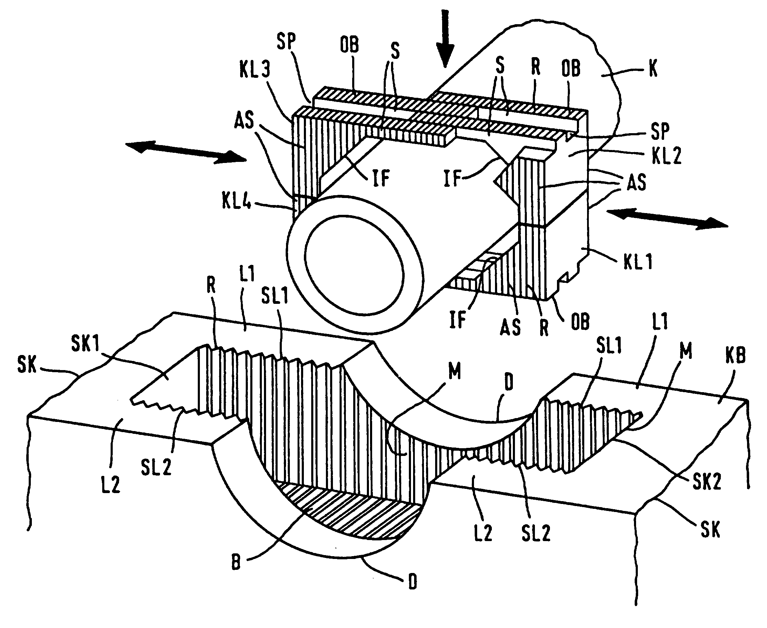

Die Figur zeigt das zu verklemmende Ende eines Kabels K. Erfindungsgemäß ist ein Satz von vier Klemmbacken KL1...KL4 vorhanden, welche um den Mantel des Kabels K legbar sind, und die jeweils zumindest an einer Außenseite AS eine Riffelung R aufweisen. Die Erfindung enthält ferner eine annähernd quer zum jeweils zu verklemmenden Kabel K verlaufende, bevorzugt gestreckte Mulde M. Dabei weist zumindest eine der annähernd quer zum Kabel K verlaufenden Längsinnenseiten SL1, SL2 der Mulde M ebenfalls eine zur Riffelung auf den Klemmbacken korrespondierende Riffelung R auf. In diese sind die Klemmbacken KL1...KL4 über die jeweils geriffelte Außenseite AS von oben derart einschiebbar, daß eine radial auf den Kabelmantel einwirkende, eine Klemmwirkung verursachende Kraft entsteht und die gewünschte "Zugentlastung" bewirkt wird.

Bei der in der Figur dargestellten Ausführung der erfindungsgemäßen Vorrichtung ist ein separater Block vorhanden, in den die annähernd quer zum jeweils zu verklemmenden Kabel K verlaufende Mulde M eingeformt ist. Dieses nachfolgend als Muldenblock KB bezeichnete Element kann einteilig an ein nicht dargestelltes weiteres Bauteil, z.B. ein Steckergehäuse, angeformt sein, bzw. es kann mit Hilfe von nicht dargestellten Befestigungselementen in Gehäusen oder Geräten, z.B. in einem Schaltschrank, montiert sein.

Die quer zur Kabelrichtung gestreckt verlaufende Mulde M im Muldenblock KB verfügt als Innenflächen über zwei gegenüberliegende Längsinnenseiten SL1,SL2 und einen Muldenboden M. Grundsätzlich ist es ausreichend, wenn zumindest eine der beiden quer verlaufenden Längsinnenseiten SL1,SL2 der Mulde mit einer Riffelung R belegt ist. Zur Erhöhung der Klemmwirkung ist es aber vorteilhaft, wenn alle Oberflächen auf der Muldeninnenseite mit einer durchgängigen Riffelung versehen sind. In einem solchen Fall verläuft Riffelung in Richtung des eingelegten Kabels K bevorzugt beginnend an der Oberkante der ersten Längsinnenseite SL1 über den Boden B der Mulde bis hin zur Oberkante der gegenüberliegenden, zweiten Längs innenseite SL2 der Mulde. Eine solche Ausführungsform ist in der Figur bereits dargestellt. Die Mulde wird in Querrichtung begrenzt durch Stirninnenseiten SK1,SK2, welche nicht mit einer Riffelung belegt sein brauchen. Der gegenseitige Abstand dieser Stirninnenseiten sollte und kann möglichst groß sein, so daß die Mulde eine möglichst große Quererstreckung aufweist. Es ist dann möglich, auch Kabel mit u.U. sehr großen Querschnitten zu verklemmen, da die um den Kabelmantel gelegten Klemmbacken dann auch in einem solchen Fall in die Mulde einschiebbar sind.

Bei dem in der Figur dargestellten Ausführungsbeispiel verfügt der Muldenblock KB über Längsaußenseiten L1,L2, welche annähernd parallel zu den geriffelten Längsinnenseiten SL1, SL2 liegende Oberflächen aufweisen. Vorteilhaft sind in diese Längsaußenseiten L1,L2 bevorzugt halbkreisförmige Durchbrüche D eingebracht, die zur Einlage des Kabelmantels dienen. Durch die hierdurch erreichte tiefere Lage des Kabels in der Mulde kann vorteilhaft aufgrund des somit früheren Eingriffes der Klemmbacken in die Riffelung der Mulde bei deren Einschiebung eine Erhöhung der erzielbaren Klemmwirkung bewirkt werden. Schließlich können in den nicht dargestellten Verlängerungen der Stirnseiten SK des Muldenblocks KB Befestigungselemente zur Halterung desselben an umgebenden Bauteilen angebracht sein.

Entsprechend der Darstellung in der Figur ist zur Verklemmung eine Satz von vier, bevorzugt identischen Klemmbacken KL1... KL4 vorhanden. Jede Klemmbacke greift dabei auf ca. einem Viertel des Umfangs auf den Mantel des zu verklemmenden Kabels K ein. Erfindungsgemäß ist mindestens eine der Außenseiten AS jeder Klemmbacke, welche parallel zur Querschnittsfläche des zu verklemmenden Kabels ist, mit einer Riffelung R belegt. Diese Riffelung korrespondiert mit der auf einer oder mehreren Innenseiten der Mulde angebrachten Riffelung, d.h. weist vorteilhaft die gleiche, bevorzugt dreieckförmige Querschnittsform auf.

Bei der in der Figur dargestellten Ausführungsform sind pro Klemmbacke KL1... KL4 vorteilhaft beide parallel zur Querschnittsfläche des zu verklemmenden Kabels liegende Außenseiten AS des Kabels K mit einer Riffelung versehen. Vorteilhaft verfügt jede Klemmbacke zusätzlich über abgeschrägte Innenseiten IF. An diesen Innenseiten IF können zusätzlich messerartige Kanten angebracht sein. Diese Innenseiten der Klemmbacken greifen so auf den Kabelmantel ein, daß die ausübbare Klemmwirkung verstärkt wird.
Vorteilhaft sind die vier Klemmbacken KL1...KL4 formgleich und bezüglich annähernd des Kabelmittelpunktes punktsymmetrisch ausgeführt. Eine derartige Ausführung ist in der Figur bereits dargestellt. Vorteilhaft sind zusätzlich an jeder Klemmbacke an zumindest einer Außenseite mindestens zwei parallel nebeneinander liegende Führungsstreben S angebracht. Der jeweilige Längsspalte SP zwischen zwei Führungsstreben hat dabei eine Weite, welche geringfügig größer ist als die Dicke einer Strebe. Diese Führungsstreben sind an jeder Klemmbacke so außermittig angeordnet, daß bei zwei gegenüber liegenden Klemmbacken die Stirnbereiche der Führungsstreben S über die jeweiligen Längsspalten SP in Art einer Verzahnung ineinander eingreifen.

Bei dem in der Figur dargestellten Beispiel greifen auf der Oberseite des Kabels K die Führungsstreben S der beiden Klemmbacken KL2 und KL3 ineinander ein. Dabei kommen die Führungsstreben einer Klemmbacke in den Längsspalten zwischen den Führungsstreben der gegenüberliegenden Klemmbacke zu liegen. In entsprechender Weise greifen in der Figur auf abgedeckten Unterseite die Führungsstreben S der beiden Klemmbacken KL1 und KL4 ineinander ein. Bei entsprechender Länge der Führungsstreben ist ein derartiger, die Anordnung der vier Klemmbacken erheblich stabilisierender wechselseitiger Eingriff der Führungsstreben auch dann gewährleistet, wenn das jeweils zu verklemmende Kabel einen relativ großen Durchmesser aufweist.

Bei einer weiteren, nicht dargestellten Ausführungsform sind an beiden Außenseiten einer jeden Klemmbacke entsprechende Führungsstreben angebracht. Jede Klemmbacke kann folglich mit den beiden benachbarten Klemmbacken in der oben beschriebenen Weise verzahnt werden.

Vorteilhaft ist jede der Führungsstreben S auf der Oberseite OB, welche je nach Lage der jeweiligen Klemmbacke im entsprechenden Winkelsegment entweder dem Boden bzw. der offenen Oberseite der Mulde zugewandt ist, ebenfalls mit einer Riffelung R belegt. Nach Einlegung des Kabels K in die Durchbrüche D des Muldenblocks KB im Beispiel der Figur und der dabei erfolgten Einschiebung der Klemmbacken KL1... KL4 in die Riffelungen auf den beiden Längsinnenseiten SL1, SL2 des Muldenblocks KB können bei dieser Ausführung auch die Riffelungen auf den Oberseiten OB der dem Muldenboden B zugewandten Führungsstreben KL1 und KL4 in eine auf dem Boden B der Mulde M entsprechend vorhandene Riffelung R eingreifen.

Die Erfindung hat den Vorteil, daß ein Toleranzausgleich zur Anpassung der erfindungsgemäßen Kabelklemmvorrichtung an den aktuellen Querschnitt eines jeweils zu verklemmenden Kabels K in einfacher Weise dadurch möglich ist, daß die vier Klemmbacken KL1...KL4 in der in der Figur durch zwei Doppelpfeile markierten Richtung ausweichen können, und aufgrund der quer zum Kabel bevorzugt gestreckt verlaufenden Mulde M und der Feinheit der Riffelungen auf den Klemmbacken und in der Mulde dennoch eine ausreichende, auf den Kabelmantel einwirkende Klemmkraft aufgebracht werden kann.

Bei einer weiteren, nicht dargestellten Ausführungsform sind zwei gegenüber liegende, gegebenenfalls in zwei separate Muldenblöcke eingeformte Mulden mit in der oben beschriebenen Weise geriffelten Längsinnenseiten vorhanden. In einem solchen Fall werden zwei z.B. unten liegende Klemmbacken, im Beispiel der Figur die Klemmbacken KL1 und KL4, in die untere Mulde, und zwei z.B. oben liegende Klemmbacken, im Beispiel der Figur die Klemmbacken KL2 und KL3, in die obere Mulde erfindungsgemäß derart eingeschoben, daß eine radial auf den Kabelmantel einwirkende Klemmkraft entsteht. Diese Ausführungsform der Erfindung ist besonders dafür geeignet, daß die beiden gegenüber liegenden, sich im komplett montierten Zustand gegenseitig abgedeckenden Mulden z.B. auf den Innenseiten von zwei Steckergehäusehalbschalen eingeformt sind.

## Patentansprüche

1. Vorrichtung zur variablen Verklemmung von Kabeln (K) unterschiedlichen Durchmessers, mit
a) einem Satz von vier Klemmbacken (KL1...KL4), welche
1) annähernd in einer gemeinsamen radialen Ebene um den Mantel des jeweils zu verklemmenden Kabels (K) legbar sind, und
2) die jeweils zumindest an einer in der radialen Ebene liegenden Außenseite (AS) eine Riffelung (R) aufweisen, und mit
b) mindestens einer annähernd quer zum jeweils zu verklemmenden Kabel (K) verlaufenden Mulde (M), wobei zumindest eine der annähernd quer zum Kabel (K) verlaufenden Längsinnenseiten (SL1, SL2) der mindestens einen Mulde (M) eine Riffelung (R) aufweist, und wobei
c) die Riffelung (R) auf der Außenseite der Klemmbacken (KL1...KL4) und die Riffelung (R) auf einer Längsinnenseite (SL1, SL2) der Mulde (M) so korrespondieren, daß die Klemmbacken (KL1...KL4) mit Aufbringung einer radial auf den Kabelmantel einwirkende Klemmkraft in die Mulde (M) einschiebbar sind.

2. Vorrichtung nach Anspruch 1, mit mindestens einem, separaten Block, welcher die mindestens eine, annähernd quer zum jeweils zu verklemmenden Kabel (K) verlaufende Mulde (M) aufweist.

3. Vorrichtung nach Anspruch 2, wobei die Längsseiten (L1,L2) des mindestens einen separaten Blocks (KB) annähernd halbkreisförmige Durchbrüche (D) aufweisen, in welche das jeweils zu verklemmenden Kabel (K) einlegbar ist.

4. Vorrichtung nach einem der vorangegangenen Ansprüche, wobei die vier Klemmbacken (KL1...KL4) formgleich und bezüglich annähernd des Kabelmittelpunktes punktsymmetrisch sind.

5. Vorrichtung nach einem der vorangegangenen Ansprüche, wobei jede Klemmbacke (KL1...KL4) an mindestens einer Außenseite mindestens zwei derart parallel angeordnete Führungsstreben (S) aufweist, daß die Führungsstreben (S) einer Klemmbacke (KL1 bzw. KL2) in die Längsspalten (SP) zwischen den Führungsstreben (S) mindestens einer benachbarten Klemmbacke (KL4 bzw. KL3) eingreifen.

6. Vorrichtung nach Anspruch 5, wobei zusätzlich die Oberseiten (OB) der Führungsstreben (S) einer jeden Klemmbacke (KL1...KL4) mit einer Riffelung (R) belegt sind.

## Claims

1. Device for the adjustable clamping of cables (K) of differing diameters, having
a) a set of four clamping jaws (KL1...KL4), which
1) can be placed approximately in a common radial plane around the sheath of the respective cable (K) to be clamped, and
2) each of which has a corrugation (R) on at least one outer side (AS) lying in the radial plane, and having
b) at least one trough (M) running approximately transversely to the respective cable (K) to be clamped, at least one of the longitudinal inner sides (SL1, SL2) of at least one of the troughs running approximately transversely to the cable (K) having a corrugation (R), and
c) the corrugation (R) on the outer side of the clamping jaws (KL1...KL4) and the corrugation (R) on one longitudinal inner side (SL1...SL2) of the trough (M) correspond so that the clamping jaws (KL1...KL4) can be inserted into the trough (M) when a radial clamping force acting on the cable sheath is applied.

2. Device according to Claim 1, having at least one separate block which has at least one trough (M) running approximately transversely to the respective cable (K) to be clamped.

3. Device according to Claim 2, in which the longitudinal sides (L1, L2) of the at least one separate block (KB) have semicircular openings (D) in which the respective cable (K) to be clamped can be placed.

4. Device according to one of the preceding Claims, in which the four clamping jaws (KL1...KL4) are of identical form and are approximately centrosymmetric with respect to the centre point of the cable.

5. Device according one of the preceding Claims, in which each clamping jaw (KL1...KL4) has two parallel guide webs (S) on at least one of the outer sides and arranged so that the guide webs (S) of one clamping jaw (KL1 or KL2, respectively) engage with the longitudinal gaps (SP) between the guide webs (S) of at least one of the adjacent clamping jaws (KL4 or KL3, respectively).

6. Device according to Claim 5, in which the upper sides (OB) of the guide webs (S) of each of the clamping jaws (KL1...KL4) are additionally covered by a corrugation (R).

## Revendications

1. Dispositif pour le blocage variable de câbles (K) de différents diamètres, comprenant
a) un jeu de quatre mors (KL1 ... KL4) de serrage, qui
1) peuvent être appliqués approximativement dans un plan radial commun autour de la gaine du câble (K) respectif à bloquer par serrage, et
2) qui sont chacun pourvus d'un cannelage (R) au moins sur un côté (AS) extérieur situé dans le plan radial, et comprenant
b) au moins une cuvette (M) s'étendant approximativement transversalement au câble (K) respectif à bloquer par serrage, au moins un des côtés (SL1, SL2) intérieurs longitudinaux, s'étendant approximativement transversalement au câble (K), de la ou des cuvettes (M) étant pourvu d'un cannelage (R), et
c) le cannelage (R) sur le côté extérieur des mors (KL1 ... KL4) de serrage et le cannelage (R) sur un côté (SL1, SL2) intérieur longitudinal de la cuvette (M) correspondant entre eux de telle sorte que les mors (KL1 ... KL4) de serrage peuvent être enfilés dans la cuvette (M) en exerçant une force de serrage agissant radialement sur la gaine du câble.

2. Dispositif suivant la revendication 1, comprenant au moins un bloc séparé, qui comporte la ou les cuvettes (M) s'étendant approximativement transversalement au câble (K) respectif à bloquer par serrage.

3. Dispositif suivant la revendication 2, les côtés longitudinaux (L1, L2) du ou des blocs (KB) séparés étant pourvus d'ajours (D) approximativement semi-circulaires, dans lesquels le câble (K) respectif à bloquer par serrage peut être inséré.

4. Dispositif suivant l'une des revendications précédentes, les quatre mors (KL1 ... KL4) de serrage étant de forme identique et à symétrie ponctuelle par rapport, environ, au centre du câble.

5. Dispositif suivant l'une des revendications précédentes. chaque mors (KL1 ... KL4) de serrage comportant, sur au moins un côté extérieur. au moins deux nervures (S) de guidage parallèles de telle sorte que les nervures (S) de guidage d'un mors (KL1 ou KL2) de serrage s'engagent dans les fentes longitudinales (SP) entre les nervures (S) de guidage d'au moins un mors (KL4 ou KL3) de serrage voisin.

6. Dispositif suivant la revendication 5, les côtés supérieurs (OB) des nervures (S) de guidage de chaque mors (KL1 ... KL4) de serrage étant en outre pourvus d'un cannelage (R).
